Europäisches Patentamt

European Patent Office

Office européen des brevets

(19)

(11) **EP 1 164 108 A1**

## (12) EUROPEAN PATENT APPLICATION

(43) Date of publication:
**19.12.2001 Bulletin 2001/51**

(51) Int Cl.⁷: **C01B 31/02**

(21) Application number: **01305086.9**

(22) Date of filing: **11.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.06.2000 JP 2000177378**

(71) Applicant: **Toda Kogyo Corporation**
**Hiroshima-shi, Hiroshima-ken (JP)**

(72) Inventor: **Kobayashi , Naoya**
**Hiroshima-shi, Hiroshima-ken (JP)**

(74) Representative: **Woods, Geoffrey Corlett**
**J.A. KEMP & CO. Gray's Inn 14 South Square**
**London WC1R 5JJ (GB)**

### (54) Hollow carbon particles and process for producing the same

(57) Hollow carbon particles having an average particle size of from 0.05 to 5.0 μm, a shell thickness of from 5 to 50 nm and a particle size distribution of not more than 30%. The hollow carbon particles may be used in electrodes, display device materials, materials for hydrogen occlusion or storage, adsorbents or catalysts.

EP 1 164 108 A1

# EP 1 164 108 A1

**Description**

The present invention relates to hollow carbon particles and a process for producing the same, and more particularly, to hollow carbon particles having a uniform particle size and a process for producing such hollow carbon particles in an industrially and economically useful manner.

At present, attention has been paid to materials called "carbon nanotubes". Each carbon nanotube has such a structure that crystalline graphite is wound into a cylindrical shape. In the carbon nanotube, the graphite is present in the form of single-layer carbon or multi-layer carbon. The carbon nanotube has a fine cylindrical shape having a diameter of several tens nm, and is either opened or closed at the tip ends.

The carbon nanotubes are expected to be used in various applications such as electrodes, for example, negative electrode materials for lithium ion secondary batteries, materials for display devices, materials for hydrogen occlusion or storage, adsorbents, or catalysts, because of excellent mechanical strength and unique electronic properties thereof. Some of these applications have been already put into practice.

As the method for producing the carbon nanotubes, there is known an arc-discharge method using graphite electrodes.

It has now been strongly required to provide a process for producing hollow carbon particles having uniform particle sizes in an industrially and economically useful manner. However, such a process has not been attained until now.

That is, the known arc-discharge method not only requires the use of specific production apparatus, but also results in a low yield of the aimed carbon nanotubes. Further, in the arc-discharge method, it is difficult to control the particle size of the obtained carbon nanotubes, resulting in broad particle size distribution thereof and, therefore, necessity of an additional purification step. Thus, the known process is industrially disadvantageous.

As a result of the present inventors' earnest studies to solve the above problem, it has been found that by mixing inorganic compound particles, a coupling agent and fine carbon black particles together to coat the surface of each inorganic compound particle with the fine carbon particles through the coupling agent, thereby obtaining composite particles; and eluting the inorganic compound particles and the coupling agent from the composite particles, the obtained hollow carbon particles have a desired shape, and are excellent in particle size distribution and mechanical strength. The present invention has been attained based on the above finding.

An object of the present invention is to provide hollow carbon particles which have a desired shape, and are excellent in particle size distribution and mechanical strength.

Another object of the present invention is to provide a process for producing hollow carbon particles having uniform particle sizes in an industrially and economically useful manner.

To accomplish the aims, in a first aspect of the present invention, there are provided hollow carbon particles having an average particle size of 0.05 to 5.0 $\mu$m, a shell thickness of 5 to 50 nm and a particle size distribution of not more than 30%.

In a second aspect of the present invention, there is provided a process for producing hollow carbon particles, comprising:

mixing inorganic compound particles, a coupling agent and fine carbon black particles together to coat the surface of each inorganic compound particle with the fine carbon particles through the coupling agent, thereby obtaining composite particles; and
eluting the inorganic compound particles and the coupling agent from the composite particles.

In a third aspect of the present invention, there are provided hollow carbon particles having an average particle size of 0.05 to 5.0 $\mu$m, an average particle minor size of 0.010 to 1.0 $\mu$m, a particle size distribution of not more than 30%, and a shell thickness of 5 to 50 nm.

In a fourth aspect of the present invention, there are provided hollow carbon particles having an average particle size of 0.05 to 5.0 $\mu$m, a sphericity (average particle diameter/average minor diameter) of 1:1 to 1.4:1, a particle size distribution of not more than 30%, and a shell thickness of 5 to 50 nm.

In a fifth aspect of the present invention, there is provided a process for producing hollow carbon particles, comprising:

mixing inorganic compound particles with a silane-based coupling agent, a titanate-based coupling agent or an aluminum-based coupling agent in an amount of usually 0.001 to 45 parts by weight based on 100 parts by weight of the inorganic compound particles to coat the surface of each inorganic compound particle with the coupling agent; adding to the inorganic compound particles coated with the coupling agent, fine carbon black particles having an average particle diameter of 0.005 to 0.05 $\mu$m in an amount of usually 1 to 30 parts by weight based on 100 parts by weight of the inorganic compound particles, and mixing these particles together to adhere the fine carbon black onto the surface of the coupling agent, thereby obtaining composite particles; and
eluting the inorganic compound particles and the coupling agent from the composite particles by treating the composite particles with acid or alkali at a temperature of not more than 100°C.

In a sixth aspect of the present invention, there are provided hollow carbon particles having an average particle size of 0.05 to 5.0 μm, a shell thickness of 5 to 50 nm and a particle size distribution of not more than 30%, said hollow carbon particles being produced by a process comprising:

mixing inorganic compound particles with a silane-based coupling agent, a titanate-based coupling agent or an aluminum-based coupling agent in an amount of usually 0.001 to 45 parts by weight based on 100 parts by weight of the inorganic compound particles to coat the surface of each inorganic compound particle with the coupling agent; adding to the inorganic compound particles coated with the coupling agent, fine carbon black particles having an average particle diameter of 0.005 to 0.05 μm in an amount of usually 1 to 30 parts by weight based on 100 parts by weight of the inorganic compound particles, and mixing these particles together to adhere the fine carbon black onto the surface of the coupling agent, thereby obtaining composite particles; and
eluting the inorganic compound particles and the coupling agent from the composite particles by treating the composite particles with acid or alkali at a temperature of not more than 100°C.

The present invention will now be described in detail below.

First, the hollow carbon particles of the present invention are described below.

The hollow carbon particles of the present invention have an average particle size of usually 0.05 to 5.0 μm, a shell thickness of 5 to 50 nm and a particle size distribution of usually not more than 30%. Here, the "average particle size" means an average major axial diameter in the case of granular particles such as spherical particles, granular particles, octahedral particles, hexahedral particles or polyhedral particles, or acicular particles such as needle-shaped particles, spindle-shaped particles or rice grain-shaped particles; and an average plate surface diameter in the case of plate-shaped particles.

The hollow carbon particles of the present invention may have further an average particle minor size of usually 0.01 to 1.0 μm. The "average particle minor size" means an average minor axial diameter in the case of acicular particles- such as needle-shaped particles, spindle-shaped particles or rice grain-shaped particles, and an average thickness in the case of plate-shaped particles.

When the average particle size and average particle minor size of the hollow carbon particles are within the above-specified ranges, the obtained hollow carbon particles can fulfil properties required in various applications as described above. Also, the hollow carbon particles whose average particle size and average particle minor size are out of the above-specified ranges, are difficult to industrially produce. The average particle size of the hollow carbon particles is preferably 0.05 to 3.0 μm, more preferably 0.005 to 2.0 μm, still more preferably 0.005 to 1.5 μm, and the average particle minor size thereof is preferably 0.01 to 0.6 μm, more preferably 0.01 to 0.3 μm, still more preferably 0.01 to 0.1 μm.

The hollow carbon particles of the present invention have a particle size distribution of not more than 30%. When the particle size distribution is as broad as more than 30 %, the obtained hollow carbon particles are non-uniform in particle size. The particle size distribution of the hollow carbon particles according to the present invention is preferably not more than 28 %, more preferably not more than 25 %, still more preferably not more than 22.

The hollow carbon particles of the present invention can maintain substantially the same shape as that of the inorganic compound particles used as core particles in raw materials. Therefore, by using inorganic compound particles having a desired shape, there can be obtained hollow carbon particles having an optional shape such as acicular, spindle-shaped, rice gain-shaped, granular, spherical, hexahedral, octahedral or plate-shaped particles.

In the case where the hollow carbon particles are granular particles such as spherical particles, granular particles, octahedral particles, hexahedral-particles or polyhedral particles, the average particle diameter (average particle size) thereof is usually 0.05 to 5.0 μm, preferably 0.05 to 3.0 μm, more preferably 0.005 to 2.0 μm, still more preferably 0.005 to 1.5 μm; and the sphericity (average particle diameter/average minor diameter) is preferably 1:1 to 1.4:1, more preferably 1:1 to 1.2:1, still more preferably 1:1 to 1.1:1.

In the case where the hollow carbon particles are acicular particles such as needle-shaped particles, spindle-shaped particles or rice grain-shaped particles, the average major axial diameter (average particle size) thereof is usually 0.05 to 5.0 μm, preferably 0.05 to 3.0 μm, more preferably 0.005 to 2.0 μm, still more preferably 0.005 to 1.5 μm; the average minor axial diameter (average particle minor size) thereof is usually 0.01 to 1.0 μm, preferably 0.01 to 0.6 μm, more preferably 0.01 to 0.3 μm, still more preferably 0.01 to 0.1 μm; and the aspect ratio (major axial diameter/minor axial diameter) thereof is preferably 2:1 to 500:1, more preferably 2:1 to 300:1.

In the case where the hollow carbon particles are plate-shaped particles, the plate surface diameter (average particle size) thereof is usually 0.05 to 5.0 μm, preferably 0.05 to 3.0 μm, more preferably 0.005 to 2.0 μm, still more

preferably 0.005 to 1.5 μm; the average plate thickness (average particle minor size) thereof is usually 0.01 to 1.0 μm, preferably 0.01 to 0.6 μm, more preferably 0.01 to 0.3 μm, still more preferably 0.01 to 0.1 μm; and the plate ratio (plate surface diameter/plate thickness) thereof is preferably 2:1 to 500:1, more preferably 2:1 to 300:1.

The hollow carbon particles of the present invention have a BET specific surface area value of usually 1 to 250 m$^2$/g, preferably 2 to 200 m$^2$/g, more preferably 2 to 150 m$^2$/g.

The hollow carbon particles of the present invention are hollow particles maintaining substantially the same shape as that of the inorganic compound particles. When the hollow carbon particles are acicular particles, the opposite tip ends thereof may be either opened or closed.

The hollow carbon particles of the present invention have a shell thickness of usually 5 to 50 nm (0.005 to 0.05 μm), preferably 5 to 40 nm (0.005 to 0.04 μm), more preferably 5 to 28 nm (0.005 to 0.028 μm).

The hollow carbon particles of the present invention have a mixed structure of amorphous phase (carbon) and crystal phase (graphite).

Next, the process for producing hollow carbon particles according to the present invention will be described below.

The hollow carbon particles of the present invention can be produced by forming a coating layer composed of the coupling agent on the surface of each inorganic compound particle; adhering the fine carbon black on the surface of the coating layer composed of the coupling agent to produce composite particles; and then eluting the inorganic compound particles and the coupling agent from the composite particle.

As the inorganic compound particles used as core particles in the present invention, there may be exemplified particles of metals, alloys, oxides, hydroxides, nitrides or the like. Specific examples of the metals may include metal iron or the like. Specific examples of the oxides may include hematite, magnetite, maghemite, magnesium oxide or the like. Specific examples of the hydroxides may include goethite, magnesium hydroxide, hydrotalcite or the like. Specific examples of the nitrides may include trisilicon tetranitride (Si$_3$N$_4$) or the like. The shape of the hollow carbon particles may be varied depending upon industrial productivity, economy and applications. In the consideration of the variation in particle shape, iron compounds such as hematite, magnetite, maghemite and goethite are preferred.

Thus, the shape of the inorganic compound particles used as core particles may be appropriately selected according to the aimed shape of the hollow carbon particles. For example, the inorganic compound particles may be granular particles such as spherical particles, granular particles, octahedral particles, hexahedral particles or polyhedral particles; acicular particles such as needle-shaped particles, spindle-shaped particles or rice grain-shaped particles; plate-shaped particles; or the like.

The inorganic compound particles used as core particles in the present invention have an average particle size of usually 0.05 to 5.0 μm, and an average particle minor size of usually 0.01 to 1.0 μm.

In the case where the inorganic compound particles are granular particles such as spherical particles, granular particles, octahedral particles, hexahedral particles or polyhedral particles, the average particle diameter (average particle size) thereof is usually 0.05 to 5.0 μm, preferably 0.05 to 3.0 μm, more preferably 0.005 to 2.0 μm, still more preferably 0.005 to 1.5 μm; and the sphericity (average particle diameter/average minor diameter) is preferably 1:1 to 1.4:1, more preferably 1:1 to 1.2:1, still more preferably 1:1 to 1.1:1.

In the case where the inorganic compound particles are acicular particles such as needle-shaped particles, spindle-shaped particles or rice grain-shaped particles, the average major axial diameter (average particle size) thereof is usually 0.05 to 5.0 μm, preferably 0.05 to 3.0 μm, more preferably 0.005 to 2.0 μm, still more preferably 0.005 to 1.5 μm; the average minor axial diameter (average particle minor size) thereof is usually 0.01 to 1.0 μm, preferably 0.01 to 0.6 μm, more preferably 0.01 to 0.3 μm, still more preferably 0.01 to 0.1 μm; and the aspect ratio (major axial diameter/minor axial diameter) thereof is preferably 2:1 to 500:1, more preferably 2:1 to 300:1.

In the case where the inorganic compound particles are plate-shaped particles, the plate surface diameter (average particle size) thereof is usually 0.05 to 5.0 μm, preferably 0.05 to 3.0 μm, more preferably 0.005 to 2.0 μm, still more preferably 0.005 to 1.5 μm; the average plate thickness (average particle minor size) thereof is usually 0.01 to 1.0 μm, preferably 0.01 to 0.6 μm, more preferably 0.01 to 0.3 μm, still more preferably 0.01 to 0.1 μm; and the plate ratio (plate surface diameter/plate thickness) thereof is preferably 2:1 to 500:1, more preferably 2:1 to 300:1.

The inorganic compound particles used as core particles in the present invention have a BET specific surface area value of usually 1 to 250 m$^2$/g, preferably 2 to 200 m$^2$/g, more preferably 2 to 150 m$^2$/g.

Examples of the coupling agent used in the present invention may include silane-based coupling agents, titanate-based coupling agents, aluminum-based coupling agents or the like. Specific examples of the silane-based coupling agents may include alkoxysilanes such as methyltriethoxysilane, methyltrimethoxysilane, dimethyldimethoxysilane, isobutyltrimethoxysilane and phenyltriethoxysilane; vinylethoxysilane; vinyl-tris(2-methoxy-ethoxy)silane; γ-methacryloxypropyltrimethoxysilane;

γ-aminopropyltrimethoxysilane;

β-(3,4-epoxycyclohexyl)ethyltrimethoxysilane;

γ-glycidoxypropyltrimethoxysilane;

γ-mercaptopropyltrimethoxysilane; or the like. Specific examples of the titanate-based coupling agents may include isopropyltriisostearoyl titanate, isopropyltris(dioctylpyrophosphate)titanate, isopropyltri(N-aminoethyl-aminoethyl)titanate, isopropyltridecylbenzenesulfonyl titanate or the like. Specific examples of the aluminum-based coupling agents may include acetoalkoxyaluminum diisopropionate or the like.

The amount of the coupling agent added is usually 0.001 to 45 parts by weight, preferably 0.005 to 35 parts by weight based on 100 parts by weight of the inorganic compound particles. When the amount of the coupling agent added is less than 0.001 part by weight, it is difficult to adhere the carbon black thereto in such an amount as to form the aimed hollow structure. When the amount of the coupling agent added is more than 45 parts by weight, a sufficient amount of carbon black can be adhered thereto. However, the use of such a large amount of the coupling agent is unnecessary and meaningless since the carbon black-adhering effect of the coupling agent is already saturated.

The fine carbon black particles used in the present invention have an average particle diameter of usually about 0.005 to 0.05 μm, preferably about 0.010 to 0.035 μm.

The amount of the fine carbon black particles added is usually 1 to 30 parts by weight, preferably 3 to 25 parts by weight based on 100 parts by weight of the inorganic compound particles. When the amount of the fine carbon black particles added is less than 1 part by weight, it is difficult to obtain hollow carbon particles having a sufficient mechanical strength because of insufficient amount of carbon black adhered thereonto. When the amount of the fine carbon black particles added is more than 30 parts by weight, it is possible to obtain hollow carbon particles having a sufficient mechanical strength. However, since the improving effect of the fine carbon black particles is already saturated, the use of such a large amount of the fine carbon black particles is unnecessary or meaningless.

The carbon black formed on the surface of the coupling agent has at least one structure selected from the group consisting of (1) carbon crystallites (ultra-fine graphite particles); (2) crystal grains formed by a large growth of regularly arranged carbon crystallites; (3) aggregates or agglomerates of carbon crystallites (corresponding to fine carbon black particles); (4) a single phase or mixed phase of (1) to (3); and (5) a single layer or multi-layers of (1) to (4). Therefore, the shell of each hollow carbon particle similarly has at least one structure selected from the group consisting of (1) to (5).

In the present invention, the inorganic compound particles, the fine carbon black particles and the coupling agent are mixed with each other to obtain the desired composite particles.

Alternatively, the inorganic compound particles are preliminarily mixed with the coupling agent to coat the surface of each inorganic compound particle with the coupling agent, and then the fine carbon black particles are mixed with the thus obtained coated particles to adhere the fine carbon black onto the surface of the coupling agent. The coating of the surface of each inorganic compound particle with the coupling agent may be conducted by either dry or wet method. In the consideration of forming a uniform coating layer of the coupling agent, the use of the wet method is preferred.

As mixing apparatuses used for the above treatment, there may be exemplified those used for ordinary mixing treatments, such as mortar, attritor, sand mill, atomizer or the like.

The obtained composite particles are treated with acids or alkalis to remove the inorganic compound particles and the coupling agent therefrom.

Examples of acids usable for the elution may include hydrochloric acid, sulfuric acid, oxalic acid, acetic acid or the like. Examples of the alkalis may include an aqueous sodium hydroxide solution, ammonia or the like. The acids or alkalis are preferably selected according to the kind of inorganic compound particles used. The eluting temperature is preferably not more than 100°C. The lower limit of the eluting temperature is preferably 40°C. In case of using the metal iron particles or iron compounds particles as the inorganic compound particles, hydrochloric acid is preferred and the pH value thereof is more preferably 1 to 4.

After eluting the inorganic compound particles and the coupling agent from the composite particles, the obtained particles are water-washed and then dried by an ordinary method, thereby obtaining hollow carbon particles. By the way of parenthesis, at least one of the coupling agent may remain on the inner surface of the obtained hollow carbon particles.

The yield of the hollow carbon particles according to the present invention based on the amount of the fine carbon black particles added is usually 70 %, preferably 80 %, more preferably 85 %.

Also, in the present invention, by varying amounts of the coupling agent and the fine carbon black particles added, the tip ends of the obtained hollow carbon particles can be either opened or closed.

The hollow carbon particles obtained after the elution may be further heat-treated at a temperature of usually 300 to 1,400°C for 0.5 to 24 hours in a non-oxidative atmosphere or at a temperature of usually 300 to 1,400°C for 0.5 to 24 hours in an air, thereby obtaining densely crystallized hollow carbon particles.

The point of the present invention is that the obtained hollow carbon particles have an excellent particle size distribution.

The reason why the hollow carbon particles of the present invention have an excellent particle size distribution is considered as follows. That is, the inorganic compound particles used as core particles have an excellent particle size distribution, so that the composite particles obtained by adhering the fine carbon black thereonto through the coupling agent can maintain the good particle size distribution of the core particles. Therefore, the hollow carbon particles obtained after eluting the core particles from the composite particles can also maintain the good particle size distribution.

The function and effect of the coupling agent are considered as follows.

That is, on the basis of catalyst effects of elements contained in the inorganic compound particles as cores and Si, Ti, Al or the like contained in the coupling agent, the growth of graphite crystals which will be possible only under a high-temperature condition, can be caused on the surface of each inorganic compound particle. In addition, the graphite or carbon is adhered to the coupling agent layer formed on the surface of the inorganic compound particles, and the fine carbon black particles can be agglomerated together and fixed to each other. As a result, since each of the composite particles has a suitable carbon layer on the surface thereof, the obtained hollow carbon particles can retain the configuration of the inorganic compound particles even after eluting the inorganic compound particles and the coupling agent therefrom.

In the conventional graphite electrode arc-discharge method or vapor-phase thermal cracking method, carbon nanotubes are produced only at a low yield, and exhibit a broad particle size distribution. Consequently, it has been required to subject the obtained carbon nanotubes to time-consuming purification treatment, resulting in still lower yield thereof. On the contrary, in the present invention, since the inorganic compound particles having desired particle sizes are used as shape-retaining core particles, it is possible to readily produce the aimed hollow carbon particles having uniform particle sizes at a high yield.

The hollow carbon particles of the present invention have a desired shape and an excellent particle size distribution and, therefore, can be suitably used in various applications such as electronic devices, electrode materials and adsorbents.

In the process for producing hollow carbon particles according to the present invention, since the shape and good particle size distribution of the inorganic compound particles can be maintained through subsequent steps, it is possible to produce aimed hollow carbon particles in an industrially and economically useful manner.

EXAMPLES

The present invention will be described in more detail by reference to the following examples. However, these examples are only illustrative and not intended to limit the present invention thereto.

Various properties were measured by the following methods.

(1) The average particle size of the hollow carbon particles are expressed by averages of values measured from an electron micrograph.

(2) The observation by transmission electron microscope was performed using "EMD002D" (manufactured by TOPCOM Co., Ltd.) under an acceleration voltage of 200 kV.

(3) The particle size distribution of the particle sizes is expressed by the value measured by Lucks method. The smaller the measured value, the more excellent the particle size distribution.

(4) The specific surface area was expressed by the value measured by a BET method by means of $N_2$ adsorption.

(5) The shell thickness of the hollow carbon particles was measured from an enlarged photograph obtained by observing images thereof at a magnification ($\times$ 100,000) using a high resolution electron microscope (HREM) and magnifying the resultant developed negative film ten times.

(6) The yield (Y) of the hollow carbon particles was determined by the following formula.

$$Y = (W_1 - W_3) \div W_2 \times 100$$

wherein $W_1$ represents the weight of the composite particles, $W_2$ represents the weight of the fine carbon black particles added, $W_3$ represents the weight of the coupling agent remained on the hollow carbon particles, which was measured by means of Inductively Coupled Plasma (Shimadzu Corporation, AA-6500S) and Atomic Absorption Spectrometry (Seiko Instruments Inc., SPS-4000).

Example 1:

<Production of composite particles>

One kilogram of spindle-shaped hematite particles having an average particle diameter of 0.2 μm, an average minor axial diameter (average particle minor size) of 0.01 μm, a particle size distribution of 16% and a specific surface area value of 40.5 m$^2$/g were mixed with methyltriethoxysilane in an amount of 7% by weight based on the weight of the hematite particles. The resultant mixture was stirred for 20 minutes using a Henschel mixer. Then, amorphous carbon having an average particle diameter of 0.022 μm was added to the above mixture in an amount of 10% by weight based on the weight of the hematite particles, and the resultant mixture was stirred again for 20 minutes, thereby obtaining composite particles. When the obtained composite particles were observed by an electron microscope, it was confirmed that no isolated fine carbon black particles were present. This indicates that almost whole amount of the fine carbon black particles added were adhered onto the hematite particles through the methyltriethoxysilane.

<Production of hollow carbon particles>

Water was added to 50 g of the thus obtained composite particles to obtain one liter of a slurry. While maintaining the temperature of the obtained slurry at about room temperature, a 0.1N hydrochloric acid solution was added to the slurry to adjust the pH thereof to 2.0. The slurry was then stirred for 6 hours, filtered out, washed with water and then dried at 120°C for 12 hours, thereby obtaining spindle-shaped hollow carbon particles.

The thus obtained hollow carbon particles had an average particle size of 0.2 μm, an average particle minor size (average minor axial diameter) of 0.01 μm, a particle size distribution of 18%, a BET specific surface area value of 46.5 m$^2$/g and a shell thickness of 0.005 μm. As a result of the observation by electron microscope, it was confirmed that the opposite ends of each hollow carbon particle were closed.

Inorganic compounds 1 to 9:

Inorganic compounds 1 to 9 having properties shown in Table 1 were prepared.

Examples 2 to 12:

The same procedure as defined in Example 1 was conducted except that kind of inorganic compound particles, kind of coupling agent, amount of carbon black added, mixing order and eluting conditions were changed variously, thereby obtaining hollow carbon particles. Meanwhile, in "kind of fine carbon black particles" of Table 2, "A" represents carbon black having an average particle diameter of 0.022 μm; and "B" represents carbon black having an average particle diameter of 0.015 μm. In "mixing order" of Table 2, "sequential" represents the method of preliminarily mixing the inorganic compound particles with the coupling agent, and then adding the fine carbon black particles to the resultant coated particles in the same manner as in Example 1; and "simultaneous" represents the method of mixing the inorganic compound particles, the coupling agent and the fine carbon black particles together at the same time.

Production conditions used are shown in Table 2, and various properties of the obtained hollow carbon particles are shown in Table 3.

Table 1

| Inorganic compound particles | Properties of inorganic compound particles | | |
|---|---|---|---|
| | Kind | Shape | Average particle size (μm) |
| Inorganic compound particles 1 | Hematite | Spindle-shaped | 0.2 |
| Inorganic compound particles 2 | Hematite | Spindle-shaped | 0.2 |
| Inorganic compound particles 3 | Hematite | Spindle-shaped | 0.18 |
| Inorganic compound particles 4 | Hematite | Spherical | 0.07 |
| Inorganic compound particles 5 | Goethite | Spindle-shaped | 0.05 |
| Inorganic compound particles 6 | Goethite | Acicular | 1.0 |
| Inorganic compound particles 7 | $\alpha-Si_3N_4$ | Amorphous plate-shaped | 0.05 |
| Inorganic compound particles 8 | Hydrotalcite | Hexahedral plate-shaped | 0.3 |
| Inorganic compound particles 9 | $Mg(OH)_2$ | Hexahedral plate-shaped | 2.0 |

Table 1 (continued)

| Inorganic compound particles | Properties of inorganic compound particles | |
| --- | --- | --- |
| | Average particle minor size (µm) | Particle size distribution (%) |
| Inorganic compound particles 1 | 0.010 | 16 |
| Inorganic compound particles 2 | 0.012 | 19 |
| Inorganic compound particles 3 | 0.010 | 18 |
| Inorganic compound particles 4 | 0.07 | 20 |
| Inorganic compound particles 5 | 0.025 | 18 |
| Inorganic compound particles 6 | 0.02 | 22 |
| Inorganic compound particles 7 | 0.01 | 30 |
| Inorganic compound particles 8 | 0.06 | 21 |
| Inorganic compound particles 9 | 0.015 | 29 |

Table 1 (continued)

| Inorganic compound particles | Properties of inorganic compound particles | |
| --- | --- | --- |
| | BET specific surface area (m$^2$/g) | Average shell thickness (μm) |
| Inorganic compound particles 1 | 40.5 | 0.005 |
| Inorganic compound particles 2 | 38.5 | 0.008 |
| Inorganic compound particles 3 | 48.5 | 0.005 |
| Inorganic compound particles 4 | 30.5 | 0.028 |
| Inorganic compound particles 5 | 71.4 | 0.007 |
| Inorganic compound particles 6 | 53.6 | 0.005 |
| Inorganic compound particles 7 | 9.5 | 0.008 |
| Inorganic compound particles 8 | 13.7 | 0.01 |
| Inorganic compound particles 9 | 20.5 | 0.013 |

Table 2

| Examples | Kind of inorganic compound | Coupling agent | |
|---|---|---|---|
| | | Kind | Amount added (wt. %) |
| Example 1 | Inorganic compound particles 1 | Silane-based coupling agent | 2 |
| Example 2 | Inorganic compound particles 1 | Titanate-based coupling agent | 10 |
| Example 3 | Inorganic compound particles 1 | Aluminum-based coupling agent | 10 |
| Example 4 | Inorganic compound particles 2 | Silane-based coupling agent | 7 |
| Example 5 | Inorganic compound particles 3 | Silane-based coupling agent | 10 |
| Example 6 | Inorganic compound particles 4 | Silane-based coupling agent | 10 |
| Example 7 | Inorganic compound particles 5 | Silane-based coupling agent | 7 |
| Example 8 | Inorganic compound particles 6 | Silane-based coupling agent | 10 |
| Example 9 | Inorganic compound particles 7 | Silane-based coupling agent | 3 |
| Example 10 | Inorganic compound particles 8 | Silane-based coupling agent | 2 |
| Example 11 | Inorganic compound particles 9 | Silane-based coupling agent | 2 |

Table 2 (continued)

| Examples | Fine carbon black particles | | Mixing order |
|---|---|---|---|
| | Kind | Amount added (wt. %) | |
| Example 1 | A | 5 | Sequential |
| Example 2 | A | 14 | Sequential |
| Example 3 | A | 14 | Sequential |
| Example 4 | A | 10 | Sequential |
| Example 5 | B | 14 | Simultaneous |
| Example 6 | B | 14 | Sequential |
| Example 7 | B | 10 | Sequential |
| Example 8 | A | 14 | Sequential |
| Example 9 | A | 2.5 | Sequential |
| Example 10 | B | 5 | Sequential |
| Example 11 | B | 5 | Sequential |

(Notes)

"A": carbon black having an average particle diameter of 0.022 μm;

"B": carbon black having an average particle diameter of 0.015 μm.

Table 2 (continued)

| Examples | Composite particles | Elution | | | |
|---|---|---|---|---|---|
| | BET specific surface area ($m^2/g$) | Kind | pH (-) | Tempe-rature (°C) | Yield (%) |
| Example 1 | 43.2 | Hydrochloric acid | 2.0 | RT | 95 |
| Example 2 | 41.2 | Hydrochloric acid | 2.2 | 60 | 95 |
| Example 3 | 41.4 | Hydrochloric acid | 2.2 | 60 | 95 |
| Example 4 | 25.4 | Hydrochloric acid | 3.0 | RT | 95 |
| Example 5 | 34.3 | Hydrochloric acid | 2.3 | 60 | 95 |
| Example 6 | 28.6 | Hydrochloric acid | 2.3 | 60 | 95 |
| Example 7 | 65.7 | Hydrochloric acid | 2.0 | RT | 85 |
| Example 8 | 47.5 | Hydrochloric acid | 2.3 | 60 | 90 |
| Example 9 | 9.4 | Sodium hydroxide | 12.5 | 90 | 90 |
| Example 10 | 11.8 | Hydrochloric acid | 1.0 | 60 | 90 |
| Example 11 | 17.7 | Sulfuric acid | 4.0 | 90 | 90 |

Table 3

| Examples | Properties of hollow carbon particles | | |
|---|---|---|---|
| | Shape | Average particle size (μm) | Average particle minor size (μm) |
| Example 1 | Spindle-shaped | 0.2 | 0.010 |
| Example 2 | Spindle-shaped | 0.2 | 0.010 |
| Example 3 | Spindle-shaped | 0.2 | 0.010 |
| Example 4 | Spindle-shaped | 0.2 | 0.012 |
| Example 5 | Spindle-shaped | 0.18 | 0.010 |
| Example 6 | Spherical | 0.07 | 0.070 |
| Example 7 | Spindle-shaped | 0.05 | 0.025 |
| Example 8 | Acicular | 1.0 | 0.020 |
| Example 9 | Amorphous plate-shaped | 0.05 | 0.010 |
| Example 10 | Hexahedral plate-shaped | 0.3 | 0.060 |
| Example 11 | Hexahedral plate-shaped | 2.0 | 0.015 |

Table 3 (continued)

| Examples | Properties of hollow carbon particles | | |
|---|---|---|---|
| | Particle size distribution (%) | BET specific surface area $(m^2/g)$ | Average carbon shell thickness $(\mu m)$ |
| Example 1 | 18 | 46.5 | 0.005 |
| Example 2 | 18 | 43.8 | 0.005 |
| Example 3 | 18 | 43.4 | 0.005 |
| Example 4 | 20 | 39.7 | 0.008 |
| Example 5 | 17 | 53.8 | 0.005 |
| Example 6 | 21 | 29 | 0.028 |
| Example 7 | 22 | 90.4 | 0.007 |
| Example 8 | 22 | 55.2 | 0.005 |
| Example 9 | 29 | 15 | 0.008 |
| Example 10 | 21 | 28.6 | 0.01 |
| Example 11 | 30 | 39.1 | 0.013 |

**Claims**

1. Hollow carbon particles having an average particle size of from 0.05 to 5.0 $\mu m$, a shell thickness of from 5 to 50 nm and a particle size distribution of not more than 30%.

2. Hollow carbon particles according to claim 1, which have an average particle size of from 0.05 to 3.0 $\mu m$, a shell thickness of from 5 to 40 nm and a particle size distribution of not more than 28%.

3. Hollow carbon particles according to claim 1 or 2, which have an average particle minor size of from 0.01 to 1.0 $\mu m$.

4. Hollow carbon particles according to any one of the preceding claims having a sphericity (average particle diameter/ average minor diameter) of 1:1 to 1.4:1.

5. Hollow carbon particles according to any one of the preceding claims, which have a BET specific surface area value of from 1 to 250 $m^2/g$.

6. Hollow carbon particles according to any one of the preceding claims, which have a shell thickness of from 5 to 28 nm and a particle size distribution of not more than 22%.

7. A process for producing hollow carbon particles, the process comprising:

   (a) coating the surface of inorganic compound particles with fine carbon black particles via a coupling agent, thereby obtaining composite particles; and
   (b) eluting the inorganic compound particles and the coupling agent from the composite particles.

8. A process according to claim 7, wherein the composite particles are obtained by mixing the inorganic compound particles with the coupling agent to coat the surface of each inorganic compound particle with the coupling agent, and then adding the fine carbon black particles to the inorganic compound particles coated with the coupling agent and mixing these particles together to adhere the fine carbon black onto the surface of the coupling agent.

9. A process according to claim 7 or 8, wherein the inorganic compound particles comprise a metal, an alloy, an oxide, a hydroxide or a nitride.

10. A process according to any of claims 7 to 9, wherein the coupling agent is a silane-based coupling agent, a titanate-based coupling agent or an aluminum-based coupling agent.

11. A process according to any of claims 7 to 10, wherein the coupling agent is provided in an amount of from 0.001 to 45 parts by weight per 100 parts by weight of the inorganic compound particles.

12. A process according to any of claims 7 to 11, wherein the fine carbon black particles have an average particle diameter of from 0.005 to 0.05 μm.

13. A process according to any of claims 7 to 12, wherein the fine carbon black particles are provided in an amount of from 1 to 30 parts by weight per 100 parts by weight of the inorganic compound particles.

14. A process according to any of claims 7 to 13, wherein the inorganic compound particles and the coupling agent are eluted from the composite particles by treating the composite particles with acid or alkali.

15. A process according to any of claims 7 to 14, wherein the eluting temperature is not more than 100°C.

16. A process according to any of claims 7 to 15, wherein the hollow carbon particles obtained after the elution are further heat-treated at a temperature of from 300 to 1400°C for between 0.5 and 24 hours in a non-oxidative atmosphere or in air.

17. An electrode, display device material, material for hydrogen occlusion or storage, adsorbent or catalyst comprising hollow carbon particles according to any of claims 1 to 6.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 013, no. 331 (C-622), 25 July 1989 (1989-07-25) & JP 01 111706 A (KAWASAKI STEEL CORP), 28 April 1989 (1989-04-28) * abstract * | 1,7 | C01B31/02 |
| A | PATENT ABSTRACTS OF JAPAN vol. 2000, no. 01, 31 January 2000 (2000-01-31) & JP 11 268907 A (NIKKISO CO LTD), 5 October 1999 (1999-10-05) * abstract * | 1,7 | |
| A | TAKAHASHI H ET AL: "SIZE DISTRIBUTION AND CONTROL OF SINGLE-WALL CARBON NANOTUBES" MATERIALS SCIENCE AND ENGINEERING A: STRUCTURAL MATERIALS: PROPERTIES, MICROSTRUCTURE & PROCESSING, LAUSANNE, CH, vol. A217/A218, 1996, pages 48-49, XP000965065 ISSN: 0921-5093 * page 48 - page 49 * | 1,7 | |
| A | PATENT ABSTRACTS OF JAPAN vol. 018, no. 482 (C-1247), 8 September 1994 (1994-09-08) & JP 06 157016 A (NEC CORP), 3 June 1994 (1994-06-03) * abstract * | 1,7 | |

**TECHNICAL FIELDS SEARCHED (Int.Cl.7)**

C01B

The present search report has been drawn up for all claims

| Place of search | Date of completion of the search | Examiner |
|---|---|---|
| BERLIN | 20 September 2001 | Clement, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 30 5086

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2001

| Patent document cited in search report | | Publication date | Patent family member(s) | | Publication date |
|---|---|---|---|---|---|
| JP 01111706 | A | 28-04-1989 | NONE | | |
| JP 11268907 | A | 05-10-1999 | NONE | | |
| JP 06157016 | A | 03-06-1994 | JP | 2541434 B2 | 09-10-1996 |